# EUROPEAN PATENT APPLICATION

(11) **EP 3 403 514 A1**
(43) Date of publication of application: **21.11.2018**
(21) Application number: 17738530.9
(22) Date of filing: 13.01.2017
(51) Int. Cl.: A23L 27/00, A23L 25/00, A23L 27/60

(54) **GRANULAR MATERIAL-CONTAINING TOPPING CONDIMENT**

(30) Priority: 14.01.2016 JP 2016005349
(71) Applicant: Mizkan Holdings Co., Ltd., Handa-shi, Aichi 475-8585 (JP); Mizkan Co., Ltd., Handa-shi, Aichi 475-8585 (JP)
(72) Inventor: OHIKE, Masaki, Handa-shi Aichi 475-8585 (JP)
(74) Representative: Denison, Christopher Marcus
(86) International application number: PCT/JP2017/001015
(87) International publication number: WO 2017/122778

(57) **Abstract**

Provided is a spherical ingredient-containing condiment, which does not allow a spherical ingredient in a condiment liquid to flow down to a bottom of a container, and is favorably placed on a foodstuff, and with which the texture of the spherical ingredient is felt. A spherical ingredient-containing topping condiment, including: (A) a 4 -mesh-pass to 16 -mesh-on ingredient in an amount of 1 to 50% by weight of a whole condiment on a wet basis; and (B) a 16-mesh-pass to 100-mesh-on ingredient in an amount of 0.1 to 50% by weight of the whole condiment on a wet basis, wherein the ingredient (A) in an amount of 10 to 100% by weight on a wet basis is a spherical ingredient having a repose angle α (°) of 20°<α<45° determined with "tan α = H/r" by measuring a height H (cm) that is a difference between a highest part of a holding edge for holding the ingredient and a highest part of a substantially conical symmetrical pile when the substantially conical symmetrical pile is formed with the ingredient in a dry form by an injection method on an immobilized disk having a radius r (cm) and the holding edge, the 4-mesh-pass to 16-mesh-on spherical ingredient is contained in an amount of 3.0% by weight or more of the whole condiment on a wet basis, and the whole condiment has viscosity of 600 to 8,500 mPa·s as determined by a B-type viscometer and has viscosity of 6 to 25 cm at a measurement temperature of 20°C for a measurement time of 30 seconds as determined by a Bostwick viscometer.

## Description

### Technical Field

The present invention relates to a spherical ingredient-containing topping condiment.

### Background Art

Liquid form condiments such as a sauce and a dressing to be poured over a foodstuff (e.g., meat, fish and vegetables) when subject to meals include not only those which contain a liquid condiment (e.g., oil, vinegar, soy sauce, soup stock, extract), but also those containing ingredients including various solid ingredients, the latter of which have been recently developed. For example, grated pureed vegetables, ground sesame and the like are easy to mix with materials (tendency to stick to materials, sticky texture), and many condiments have been developed so far.

On the other hand, ground materials (e.g., ground sesame and kneaded mustard) can make use of their own flavor, but the material feeling and the texture of their own may not be enjoyed since they have not preserved their original shapes. In this regard, a material with a certain size that has preserved its original shape such as grain sesame and mustard seed, in particular, materials having a substantially spherical shape provide a popping texture to be enjoyed when they are crushed by the teeth. However, even more because of their spherical shapes, these materials are hard to mix with foodstuffs, the spherical ingredients tend to slip down in the condiment liquid to the bottom of a container, the spherical ingredients give poor placeability on the foodstuff because the spherical ingredients slip down in the condiment liquid, and popping texture is hard to feel when taken.

In order to overcome these drawbacks of the spherical ingredients, it is necessary to bring the condiment to have high viscosity like a paste. However, a condiment in a paste form has poor fluidity and such a condiment remains at a part of a foodstuff and the taste may not be spread over the whole foodstuff, and further the spherical ingredient itself is buried in the high-viscosity paste, and adversely the texture was not fully made use of. To address to the above drawbacks of the spherical ingredients, for example, Patent literature 1 discloses a condiment containing a dried vegetable and a thickener, which contains a large amount of crispy ingredients and has moderate fluidity so that allegedly the condiment does not flow down even if they are placed on a food such as meat or vegetable, can be placed on a food to be seasoned, and facilitates vegetable crispy texture.

Further, for example, Patent Literature 2 discloses a production method of a granular food-containing acidic sol-like food with long-term fixation which does not precipitate or float even after a long term storage, in which a gel-like granular food is uniformly dispersed; such as small-cut jelly or a granular food such as citrus pulp, turbid fruit juice, a small cut fruit or vegetable, a seed (e.g., sesame seed), a spice (e.g., pepper), pulp or fiber.

### Citation List

### Patent Literature

Patent Literature 1: JP 2012-170353 A
Patent Literature 2: JP 2002-17272 A

### Summary of Invention

### Technical Problem

However, the problems so far were not completely solved by these conventional arts. Patent Literature 1 requires to contain 60% to 98% of the adjusted materials, and with lower amount of the materials, it is too soft to place on a foodstuff to be seasoned, and therefore it was difficult to apply it to a topping condiment having less amount of materials. Further, in Patent Literature 2, the viscosity of the acidic sol-like food product needs to be in the range of 10 to 70 mPa·s, and viscosity higher than this range can provide poor throat comfort or generate gelation for a beverage, and therefore, such was not suitable for application to a topping condiment to be poured over a foodstuff. In addition, problems in mixing spherical ingredients were not taken into consideration, namely of rolling down in a condiment liquid to a bottom of a container and of maintaining the texture of the spherical ingredients.

Therefore, an obj ect of the present invention is to provide a topping condiment containing a spherical ingredient such as grain sesame or mustard seed, which is stably fixed inside a container and provides a favorable texture when the topping condiment is poured over a foodstuff.

### Solution to Problem

As a result of energetic investigations, the present inventor has found that by mixing a 16-mesh-pass to 100-mesh-on ingredient in addition to a 4-mesh-pass to 16-mesh-on spherical ingredient, and a non-spherical ingredient, and by adjusting both the viscosity of a condiment measured by a B-type viscometer and the viscosity of a condiment measured by a Bostwick viscometer, a topping condiment that is easy to mix with a foodstuff, hardly flows down in a condiment liquid to a bottom of a container due to the rolling down of the spherical ingredient, is favorably placeable on a foodstuff while the spherical ingredient hardly rolls down, and hardly slips through the space between teeth when taken and provides a popping texture, and thus the present inventor has completed the present invention.

That is, the present invention provides the following [1] to [5].
[1] A spherical ingredient-containing topping condiment, including: (A) a 4-mesh-pass to 16-mesh-on ingredient in an amount of 1 to 50% by weight of a whole condiment on a wet basis; and (B) a 16-mesh-pass to 100-mesh-on ingredient in an amount of 0.1 to 50% by weight of the whole condiment on a wet basis, wherein the ingredient (A) in an amount of 10 to 100% by weight on a wet basis is a spherical ingredient having a repose angle α (°) of 20°<α<45° determined with "tan α = H/r" by measuring a height H (cm) that is a difference between a highest part of a holding edge for holding the ingredient and a highest part of a substantially conical symmetrical pile when the substantially conical symmetrical pile is formed with the ingredient in a dry form by an injection method on an immobilized disk having a radius r (cm) and the holding edge, the 4-mesh-pass to 16-mesh-on spherical ingredient is contained in an amount of 3.0% by weight or more of the whole condiment on a wet basis, and the whole condiment has viscosity of 600 to 8,500 mPa·s measured by a B-type viscometer and has viscosity of 6 to 25 cm at a measurement temperature of 20°C for a measurement time of 30 seconds measured by a Bostwick viscometer.
[2] The spherical ingredient-containing topping condiment according to [1], wherein a raw material of the spherical ingredient is one or more kinds selected from grain sesame and mustard seed.
[3] The spherical ingredient-containing topping condiment according to [1] or [2], wherein one or more kinds selected from xanthan gum and processed starch are contained as a viscosity modifier.
[4] The spherical ingredient-containing topping condiment according to any one of [1] to [3], wherein a sum of an amount of the ingredient (B) on a wet basis and an amount of a non-spherical ingredient in the ingredient (A) on a wet basis is 0.1 to 140% by weight of an amount of the spherical ingredient in the ingredient (A) on a wet basis.
[5] A method for producing a spherical ingredient-containing topping condiment, including the following steps of: mixing (A) a 4-mesh-pass to 16-mesh-on ingredient such that the (A) 4-mesh-pass to 16-mesh-on ingredient is contained in an amount of 1 to 50% by weight of a whole condiment on a wet basis, and (B) a 16-mesh-pass to 100-mesh-on ingredient such that the (B) 16-mesh-pass to 100-mesh-on ingredient is contained in an amount of 0.1 to 50% by weight of the whole condiment on a wet basis; adjusting 10 to 100% by weight of the ingredient (A) on a wet basis such that the 10 to 100% by weight of the ingredient (A) on a wet basis is a spherical ingredient having a repose angle α of 20°<α<45° determined with "tan α = H/r" by measuring a height H (cm) that is a difference between a highest part of a holding edge for holding the ingredient and a highest part of a substantially conical symmetrical pile when the substantially conical symmetrical pile is formed with the ingredient in a dry form by an injection method on an immobilized disk having a radius r (cm) and the holding edge; adjusting the 4-mesh-pass to 16-mesh-on spherical ingredient such that the 4-mesh-pass to 16-mesh-on spherical ingredient is contained in an amount of 3.0% by weight or more of the whole condiment on a wet basis; and adjusting the whole condiment such that the whole condiment has viscosity of 600 to 8,500 mPa·s measured by a B-type viscometer, and has viscosity of 6 to 25 cm at a measurement temperature of 20°C for a measurement time of 30 seconds measured by a Bostwick viscometer.

### Advantageous Effects of Invention

In the topping condiment of the present invention, the spherical ingredient is easy to mix with a foodstuff, is hardly settled at a bottom of a container, hardly rolls down from a foodstuff, is favorably placeable on a foodstuff, and hardly slips through a space between the teeth when taken to provide a popping texture when taken, and the topping condiment of the present invention favorably spreads to the ingredients in the condiment liquid. According to this technique, a spherical ingredient hardly rolls down in a condiment liquid to a bottom of a container, e. g. , a PET bottle, the ingredients are uniformly discharged only by lightly shaking before use, the spherical ingredient hardly rolls down when poured over a foodstuff, and the spherical ingredient in a topping condiment and the foodstuff can be eaten at once, and a spherical ingredient-containing topping condiment that provides a popping texture of the spherical ingredient, and further favorably spreads a condiment liquid to the ingredient (excellent fluidityon the ingredients) . Further, in the industrial applications, the spherical ingredient-containing topping condiment which is favorably placeable, can be used for providing a prepared food using the condiment, and the prepared food provides a popping texture when taken without allowing the spherical ingredient to roll down from a foodstuff even if a purchaser shakes the prepared food in, for example, a shopping basket, which is beneficial.

### Description of Embodiments

Hereinafter, the present invention will be described in detail.

The spherical ingredient-containing topping condiment according to the present invention is a condiment containing a spherical ingredient as the raw material. The topping condiment is not limited as long as it contains a spherical ingredient, and the spherical ingredient-containing topping condiment can be used for, for example, dressing, seasoned vinegar, soup, stock sauce, and other whole sauces. Specifically, the spherical ingredient-containing topping condiment can be used for, for example, a sushi vinegar, a condiment for fermented soybean, a condiment for hotpot, a condiment for noodle, a condiment for cooked rice, a condiment for pot-cooked rice, a condiment for starchy sauce, a condiment for grilled meat, a condiment for prepared food, a condiment for scattered Sushi, a condiment for soybean curd, a condiment for cold Chinese noodle, a condiment for fried rice, a condiment for a rice bowl topped with tempura, sesame sauce, a condiment for dumpling, a condiment for marinated food, a condiment for a hamburger, a condiment for a steak, a condiment for a saute, a condiment used in a microwave oven, a condiment for salad, a condiment for Korean soft tofu, a condiment for stir-fry, a condiment for Japanese pilaf, a condiment for rice cooked with various ingredients, a condiment for Korean pickle, a condiment for thin wheat noodle, a condiment for deep-fried food, a condiment for ramen noodle, a condiment for stew, a condiment for thin slices of beef parboiled in hot soup, a condiment for dip, and a condiment for pasta. In particular, the present invention is useful in a topping condiment used for being put on a foodstuff, and is particularly useful in a condiment for soybean curd, a condiment for prepared food, a condiment for salad, a condiment for starchy sauce, a condiment for deep-fried food, a condiment for a hamburger, a condiment for a steak, and a condiment for a saute.

The form of the topping condiment is not limited as long as it is finally used as a liquid condiment, such as a solid form, a powder form, a liquid form, or a flowable paste form. The topping condiment may be used in any way, and there are, for example, a concentrated-type condiment used after being adjusted to the optimal concentration by adding, for example, water or soup stock at the time of use, a straight-type condiment used as it is for a foodstuff, a condiment in a powder form used for a food after being dissolved in water, and a condiment in a powder form that is poured directly over a food and exerts the effect by being dissolved by the moisture in a foodstuff, and the topping condiment is not limited as long as it has a desired ingredient proportion and a desired analysis value when used for a foodstuff. In particular, a straight-type condiment in a liquid form, which is used by being directly poured over a foodstuff is particularly excellent, and further the form of a container-packed liquid condiment is particularly excellent because of the excellent positional retention in the container. Among them, the form of a ingredient-placed liquid condiment is particularly beneficial, by which the ingredients remain on the foodstuff but the condiment liquid flows down when it is poured over a foodstuff, because it exerts the technical effect of the present invention.

In the present invention, it is required to fraction the ingredients according to the sizes by sieving with an opening of 16 mesh (JIS-Z 8801) . Mesh is a unit representing the density of eyes of, for example, wire mesh, sieve, or filter, and represents the number of meshes per inch. The thickness of the wire and the distance between eyes are specified in the JIS standard. In the present invention, as for the ingredient in a wet state, the weights of the ingredients each having a size of 16-mesh-pass, and of 4-mesh-pass to 16-mesh-on are measured.

100 grams of the sample to be measured is evenly spread on sieves stacked from the top in the order of 4-mesh, 16-mesh, and 100-mesh, and after leaving to stand for 10 minutes, the residual weight on each sieve is measured in percent by weight. At this time, the size of the ingredients passing through the 100-mesh is too small to exert the effect of the present invention, therefore, it is not taken into consideration as the total amount of the ingredients. In addition, even if the ingredients are finer than the mesh opening, there may be a case where the ingredients may remain on the sieve depending on the viscosity of the condiment liquid, and in that case, washing with water is appropriately performed to correctly measure the insoluble solids having a size corresponding to the mesh opening.

The (A) 4-mesh-pass to 16-mesh-on ingredient in the present invention refers to the total residual amount of the ingredients remaining on the 16-mesh after passing through the 4-mesh with a mesh opening larger than that of the 16-mesh. The 16-mesh-pass to 100-mesh-on ingredient refers to the residual amount of the ingredients remaining on the 100-mesh after passing through the 16-mesh.

In the present invention, it is desirable to contain a 4-mesh-pass to 16-mesh-on ingredient in an amount of 1 to 50% by weight, preferably 3 to 45% by weight, more preferably 5 to 40% by weight, and furthermore preferably 10 to 36% by weight of the whole condiment on a wet basis, because the volume the ingredients can be felt. When the amount of the 4-mesh-pass to 16-mesh-on ingredient exceeds 50% by weight, the effect of the present invention is not sufficiently exerted, and this is not preferred. When the amount of the 4-mesh-pass to 16-mesh-on ingredient is less than 1% by weight, there remains no problem to be solved by the present invention, and there is no need to use the present invention.

In the present invention, by containing the (B) 16-mesh-pass to 100-mesh-on ingredient in an amount of 0.1 to 50% by weight, preferably 0.1 to 20% by weight, more preferably 0.1 to 18% by weight, and furthermore preferably 1.0 to 5.0% by weight of the whole condiment on a wet basis, the topping condiment is remarkably made to remain on a foodstuff. When the amount of the 16-mesh-pass to 100-mesh-on ingredient is less than 0.1% by weight of the whole condiment on a wet basis, the topping condiment still tends to flow down, which is not preferred. When the amount of the 16-mesh-pass to 100-mesh-on ingredient on a wet basis is 50% by weight ormore of an amount of the ingredient of the whole condiment on a wet basis , the texture of the spherical ingredient is adversely affected, therefore, this is not preferred.

By containing the (B) 16-mesh-pass to 100-mesh-on ingredient and the (A) 4-mesh-pass to 16-mesh-on ingredient in total in an amount of 0.1 to 140% by weight, more preferably 1 to 120% by weight, and furthermore preferably 20 to 120% on a wet basis by weight of the amount of the spherical ingredient in the 4-mesh-pass to 16-mesh-on ingredient (ingredient (A)) on a wet basis, the compatibility of the topping condiment with a foodstuff improves, and the overall mildness (no strong stimulus in taste and mild feeling) improves, therefore, this is more preferred.

As the (B) 16-mesh-pass to 100-mesh-on ingredient, any one of the spherical ingredients and non-spherical ingredients described hereafter may be used, and the raw materials thereof may be as described hereafter.

As the spherical ingredient of the present invention, any spherical ingredient may be used as long as it is a spherical ingredient having a repose angle α (°) of 20°<α<45° determined with "tan α = H/r" by measuring a height H (cm) that is a difference between the highest part of a holding edge for holding the ingredients and the highest part of a substantially conical symmetrical pile when the substantially conical symmetrical pile is formed with the ingredient in a dry form by an injection method on an immobilized disk having a radius r (cm) and the holding edge.

In general, among the ingredients lacking angles, an ingredient that has 4-mesh-pass to 16-mesh-on fractions, and further has a shape such that the repose angle falls within a predetermined range may be included; for example, in addition to spherical seeds such as rice, wheat, barley, soybean, grain sesame, red bean, chick pea, corn, mustard seed (yellow, brown, and oriental), kidney bean, peanut, grain pepper, pea, lentil, chia seed, tiger bean, okra seed, quinoa, Amaranthus, basil seed, pumpkin seed, olive, gummy fruit, kiwi seed, strawberry seed, green pepper seed, and tomato seed; processed seed products such as fermented soybean, sugared bean, soybean curd, pickled ume plum, green soybean, fried rice, rice cake, and rice dumpling; vegetables, fruits and processed products thereof such as tamarind, blueberry, cranberry, raisin, grape, raspberry, black currant, boysenberry, strawberry, cherry, cherry tomato, brussels sprout, sea grape, chestnut, mushroom, mulberry, belvedere fruit, friedonion, and citrus pulp; roes and processed roe products such as salmon roe, caviar, cod roe, Mako (ovary of Walleye pollack), soft roe, seasoned cod roe, Gamuko (ovary of Walleye pollack), Metsuke (ovary of Walleye pollack), Mizuko (ovary of Walleye pollack), herring roe, salted salmon roe, Spirinchus lanceolatus roe, and capelin roe; spherically processed products such as powdered fish, tapioca, black tapioca, ball jelly, ball konjac, granular alginate, granular gel, granular protein, granular starch, granular dextrin, bits of fried tempura batter, chocolate, gummi candy, crouton, capsule, and ume plum ball (spherically processed ume plum fruit as a main material) . Even with the same foodstuff, depending on the shape, there are cases where a foodstuff having a repose angle within a predetermined range and a foodstuff having a repose angle out of the predetermined range coexist, but in such a case, the repose angles of the foodstuffs can be measured altogether.

In particular, for a foodstuff that swells in a wet state and generates slime (slippery characteristic as of polysaccharides), such as mustard seed (yellow, brown, and oriental), chia seed, okra seed, kiwi seed, and basil seed, the use of the present invention is particularly preferred because a popping texture is easily felt when taken. In addition, a foodstuff having a substantially spherical shape, such as rice, fried rice, grain sesame, mustard seed (yellow, brown, and oriental), chia seed, quinoa, citrus pulp, okra seed, basil seed, spherical protein, spherical alginate, and spherical starch processed products easily rolls down to a bottom of a container, therefore, it is preferred to use the present invention because the position of the spherical ingredient in the container can be more favorably retained. These ingredients are not limited as long as they are available on the market in general, and for example, mustard seed and chia seed, which are manufactured by Kanekasunspice Corporation, grain sesame manufactured by TAKEMOTO OIL & FAT Co., Ltd., tapioca manufactured by GABAN Co., Ltd., and basil seed manufactured by TIRAKITA CO. LTD. can be used.

The repose angle is the maximum angle of the inclined surface that maintains stability without spontaneously collapsing when the granules are piled, and is determined by the particle size, the roundness of the corners of particles, and the shape of particles. As the measurement method, a discharge method, a drop weight method, an injection method, and a gradient method are known, however, a spherical ingredient is easy to roll when falling, and the repose angle cannot be measured well by a drop weight method, a gradient method, or a discharge method. Therefore, by using an immobilized disk (for example, a container having a shape as of a Petri dish is preferable) having a holding edge for holding the ingredients, the spherical ingredient does not roll when falling and is deposited in the holding edge, therefore, the repose angle can be measured by an injection method.

In the measurement of the repose angle, it is necessary that the ingredients be dried such that the ingredients do not adhere to each other. For wet ingredients, water is drained off well from them with, for example, a strainer, then the ingredients are washed with water as necessary until the condiment liquid components adhering to the ingredients are completely removed. After that, the ingredients are dried at a high temperature of around 50°C until the moisture evaporates such that the ingredients do not adhere to each other, and then the repose angle can be measured.

The ingredient having a harder and smoother surface tends to have a lower repose angle, in which the problem of the present invention matters more, and therefore the present invention is more beneficial.

For a mixture of multiple ingredients, the spherical ingredient and the non-spherical ingredient are distinguished after separately measuring the repose angle of the ingredients in a dry state in advance, and then by measuring the weight of the ingredients in a wet state and the degree of passage through each mesh, the proportion can be adjusted to the desired proportion of the present invention. Further, even in a case where the repose angle cannot be measured in advance, the weight of the ingredients in a wet state and the degree of passage through each mesh are measured, then the 4-mesh-pass to 16-mesh-on ingredient is dried, each ingredient may be selected, and then the repose angle of each ingredient after selection may be measured. When selecting the ingredients, a method according to the suitability of the ingredients, for example, visual selection based on the differences in appearance of the ingredients, and roll selection based on the differences in shape can be used. After the selection of the ingredients, the repose angle is measured for each ingredient to distinguish the spherical ingredient and the non-spherical ingredient, and if most of the ingredients after selection are the same as one another, the repose angle of the ingredients can be predicted, and the spherical ingredient and the non-spherical ingredient can be discriminated. Further, for example, as to the ingredients having fractions trapped in both of the meshes having a size of 4-mesh-pass to 16-mesh-on and a size of 16-mesh-pass to 100-mesh-on as in ground sesame, when measuring the repose angle in a dry state in advance, by measuring the repose angle with the whole raw ingredient including all of the fractions (in this case, the whole ground sesame), the repose angle of the 4-mesh-pass to 16-mesh-on fraction can be predicted, therefore, it can be distinguished whether the ingredient is a spherical ingredient or a non-spherical ingredient. In addition, as to the ingredients having fractions trapped in both of the meshes having a size of 4-mesh-pass to 16-mesh-on and a size of 16-mesh-pass to 100-mesh-on, where the repose angle of the ingredients cannot be measured in advance, as is the case with other raw ingredients, by measuring the repose angle of the ingredient fractions trapped in a mesh of 4-mesh-pass to 16-mesh-on after washing, drying and selection, it can be distinguished whether the ingredient is a spherical ingredient or a non-spherical ingredient.

The spherical ingredient having lower repose angle tends to roll down more easily, and such a spherical ingredient easily rolls down even in a condiment liquid to a bottom of a container, and thus, the problem of the present invention exists. The repose angle of the spherical ingredient, at which the present invention can be used, is 20°<α<45°, preferably 25°<α<40°, more preferably 25°<α<38°, and most preferably 25°<α<37°.

With regard to the ingredients having a repose angle more than 45°, there is no problem of the present invention in the first place, and there is no need to use the present invention. With regard to the ingredients having a repose angle less than 20°, the fluidity is extremely high, and the effect of the present invention cannot be sufficiently exerted.

In the present invention, by containing the spherical ingredient in an amount of 10 to 100% by weight, preferably 15 to 90% by weight, more preferably 20 to 80% by weight, furthermore preferably 25 to 75% by weight, and most preferably 30 to 70% by weight of the whole 4-mesh-pass to 16-mesh-on (JIS-Z8801) ingredient in terms of wet weight, a condiment that gives a favorable chewy texture of the ingredients is obtained, and this is preferred. Among the 4-mesh-pass to 16-mesh-on ingredients, with regard to the ingredient containing the spherical ingredient in an amount of 10% by weight or less, the texture of the spherical ingredient cannot be sufficiently felt, therefore, this is not preferred.

In addition, in the present invention, by containing the 4-mesh-pass to 16-mesh-on spherical ingredient in an amount of 3% by weight or more, preferably 10% by weight or more, and more preferably 15% by weight or more of the whole condiment, the placement of the ingredients on a foodstuff is remarkably improved, therefore, this is preferred. With regard to the ingredient containing the spherical ingredient in an amount of 3% by weight or less, the effect of improving the placement is not sufficient even with the use of the present invention, therefore, this is not preferred.

Further, the condiment of the present invention may contain a 4-mesh-on ingredient or a 100-mesh-pass ingredient, and in a case where the ingredients having a size other than above satisfy the requirements of the present invention, the effect of the present invention is exerted.

The expression "4-mesh-pass to 16-mesh-on non-spherical ingredient" of the present invention refers to all of the other ingredients excluding the above-described spherical ingredient from the 4-mesh-pass to 16-mesh-on ingredient. For example, in a case where 40 g of a spherical ingredient is contained in 100 g of a 4-mesh-pass to 16-mesh-on (JIS-Z 8801) ingredient, the non-spherical ingredient is 60 g. Herein, the raw materials for the non-spherical ingredient are the same as described hereinbefore.

The Bostwick viscosity of the present invention can be measured by using a Bostwick viscometer. Specifically, the measurement is performed by using a KO-type Bostwick viscometer (manufactured by Fukaya Iron Works Co., Ltd.) . At the time of measurement, a device is horizontally arranged using a level of the device, after closing a gate, a sample whose temperature has been adjusted to 20°C is filled up to the full amount in a reservoir, the time is measured at the same time as the pushing down of a trigger to open the gate, and a distance of the flow of a ingredient in a trough after the lapse of each of 15 seconds, 30 seconds, and 60 seconds is measured.

In the present invention, by adjusting the viscosity at a measurement temperature of 20°C for a measurement time of 30 seconds as determined by a Bostwick viscometer so as to be 6 to 25 cm, preferably 6 to 22 cm, and more preferably 6 to 15 cm, a popping texture of the spherical ingredient is felt more strongly. When the measurement value at a measurement temperature of 20°C for a measurement time of 30 seconds is less than 6 cm, the condiment liquid does not sufficiently spread to a material, which is not preferred. When the measurement value is more than 25 cm, the improvement in dropping down of the ingredients is not sufficient, which is not preferred.

Further, by adjusting the viscosity at a measurement temperature of 20°C for a measurement time of 60 seconds as determined by a Bostwick viscometer so as to be 6 to 27 cm, more preferably 6 to 25 cm, and most preferably 6 to 11 cm, the ingredients are more remarkably favorably placeable, therefore, this is preferred.

Moreover, by adjusting the viscosity at a measurement temperature of 20°C for a measurement time of 15 seconds as determined by a Bostwick viscometer so as to be 5 to 26 cm, more preferably 5 to 24 cm, and furthermore preferably 5 to 19 cm, the placement of ingredients of a topping condiment liquid is improved, therefore, this is preferred.

Further, in particular, by satisfying the viscosity range at a measurement temperature of 20°C for a measurement time of 60 seconds and the viscosity range at a measurement temperature of 20°C for a measurement time of 15 seconds at the same time as determined by the above-described Bostwick viscometer, the placement of ingredients on an inclined surface is synergistically enhanced, therefore, this is more preferred.

The viscosity of the present invention can be measured by using a B-type viscometer (representing a single cylindrical rotating viscometer, and being also referred to be commonly called as a Brookfield-type rotating viscometer. For example, "B-II" manufactured by Toki Sangyo Co., Ltd). Specifically, an adequate amount of a condiment that has been adjusted at a temperature of 20°C is filled in a container for measurement by a B-type viscometer, the container is set in a B-type viscometer, and the viscosity can be measured at an appropriate revolution by using a rotor suitable for the measurement of viscosity.

By adjusting the viscosity of the topping condiment of the present invention by a B-type viscometer so as to be in the range of 600 to 8,500 mPa·s, preferably 600 to 6,100 mPa·s, more preferably 1,000 to 6, 100 mPa·s, and furthermore preferably 3,000 to 5,000 mPa·s, the compatibility of a spherical ingredient with a foodstuff when the topping condiment is used by being put over the foodstuff is remarkably enhanced, and the deliciousness of the foodstuff is increased. When the measurement value is less than 600 mPa·s, the compatibility of the topping condiment with a foodstuff becomes poor, which is not preferred. When the measurement value is more than 8,500 mPa·s, the spreading of a condiment liquid to the material is deteriorated, which is not preferred.

It is known that the Bostwick viscosity and the viscosity by a B-type viscometer greatly differ from each other in the measurement principle, and there is no correlation between both of the values. In the present invention, by adjusting both the Bostwick viscosity and the viscosity by a B-type viscometer so as to be in the above-described ranges, the sticking to a foodstuff becomes easy, hardly the flowing down to a bottom of a container becomes difficult due to the rolling down of the spherical ingredient in a condiment liquid, the spherical ingredient hardly rolls down on a foodstuff, and the placement on a foodstuff becomes favorable.

The topping condiment of the present invention is a topping condiment containing the above-described ingredient (A) and ingredient (B), and as described above, as the form, any form such as a solid form, a powder form, a liquid form, or a paste form may be accepted as long as it is finally used as a condiment in a liquid form, and a straight-type condiment in a liquid form, which is used by being directly poured over a foodstuff, is preferred. In a case of such a condiment in a liquid form, as the total amount of the ingredient (A) and the ingredient (B) on a wet basis, when the total amount on a wet basis is extremely small, the texture of the ingredients cannot be satisfactorily tasted, in contrast, when the total amount on a wet basis is extremely large, the ingredients do not come out smoothly from a condiment liquid container, therefore, 3 to 70% by weight is preferred, 5 to 60% by weight is more preferred, and 10 to 50% by weight is furthermore preferred.

The topping condiment of the present invention can contain various components according to the form of the condiment in addition to the ingredients described above . As such a component, for example, water, vinegar, salt, soy sauce, spice, sugar, a protein material, an organic acid, an amino acid-based seasoning, a nucleic acid-based seasoning, an animal and plant extract, a fermented seasoning, alcoholic liquors, a stabilizer, a coloringagent, and a viscosity modifier can be mentioned. Among them, the viscosity modifier is used for adjusting the above-described two kinds of viscosities, and examples of the viscosity modifier include raw starch, processed starch, cereal flour, gums such as xanthan gum, locust bean gum, and tamarind gum, and polysaccharides such as carrageenan, alginic acid, pectin, and agar. Among them, one kind or more selected from xanthan gum (for example, "ECHO GUM" manufactured by DSP GOKYO FOOD & CHEMICAL Co., Ltd.), and processed starch (for example, "Pine Ace #5" manufactured by Matsutani Chemical Industry Co. , Ltd.) are preferred. The content of these viscosity modifiers in the condiment may be adjusted so as to achieve the above-described viscosity, and it is preferably 0.1 to 15% by weight, and more preferably 0.2 to 10% by weight.

The topping condiment of the present invention can be produced by blending and mixing the above respective components . It is preferred to use the topping condiment of the present invention by pouring over a foodstuff.

### Examples

Next, the present invention will be described in detail by way of Examples.

### Examples 1 to 11 and Comparative Examples 1 to 6

Topping condiments shown in Tables 1 to 3 were produced. Specifically, at first, by measuring the repose angle of respective ingredients, grain sesame (manufactured by TAKEMOTO OIL & FAT Co., Ltd.), tapioca, black tapioca (manufactured by GABAN Co., Ltd.), chiaseed, yellow mustard seed, coarsely ground pepper (manufactured by Kanekasunspice Corporation), ground sesame (manufactured by Kadoya Sesame Mills Incorporated), and basil seed (manufactured by TIRAKITA CO. LTD.), the spherical ingredient and the non-spherical ingredient were sorted. Specifically, ingredients in a dry form were slowly dropped from the top onto an immobilized disk having a holding edge for holding the ingredients and having a radius of 4.25 (cm) to form a substantially conical symmetrical pile of ingredients, and a height H (cm) that is a difference between the highest part of a holding edge and the highest part of a substantially conical symmetrical pile was measured in a state that the height of the pile does not change even if ingredients overflow from the holding edge when the ingredients in an amount more than the overflowing amount are injected, and the repose angle of α(°) was calculated from "tanα = H/4.25". The repose angle of each of the ingredients was measured by performing this work for each of the ingredients . The repose angle measurement results of the respective ingredients are shown in Table 4. After that, a thickener (xanthan gum: "ECHO GUM" manufactured by DSP GOKYO FOOD & CHEMICAL Co., Ltd., and processed starch (hydroxypropylated phosphate-crosslinked starch: "Pine Ace #5" manufactured by Matsutani Chemical Industry Co., Ltd.), high-fructose corn syrup ("High-Fructose" manufactured by Kato Kagaku Co., Ltd.), common salt ("Namishio" manufactured by Nihonkaisui Co., Ltd.), and grain vinegar ("Grain Vinegar" manufactured by Mizkan Holdings Co., Ltd.) were prepared, and at first, the thickener was swollen with water, and then other raw materials were added to the swollen thickener, the resultant preparation was homogeneously mixed. After mixing the raw materials, the reactant mixture was subjected to heat sterilization at 90°C for 10 minutes, a condiment liquid was cooled and an adequate amount of water was added to the cooled condiment liquid, and a sample of a desired spherical ingredient-containing topping condiment was obtained.

A sample of 100 g of each of the condiments thus obtained was poured over a flat cross section of each of the pieces obtained by equally dividing one potato that had been boiled beforehand to produce a potato salad, and the properties and taste (deliciousness, mildness, degree of dropping down of ingredients, and spreading of condiment liquid to material) were evaluated.

The amounts of ingredients (spherical ingredient, and non-spherical ingredient), the size of ingredients, the Bostwick viscosity, and the viscosity were measured by the method described above. As to the ingredient proportion stably placed on an inclined surface, 10 g of ingredients of topping condiment was placed, for example, at the intersection point A among two places of the intersection points A and B at the end part of a paper-made flat disk having a diameter of 18 cm, that is, the center line and outer periphery of the disk, the disk was inclined at around 25° so that the intersection point A was at the uppermost part and the intersection point B was at the lowermost part, and left to stand for 30 seconds to allow the topping condiment to flow down in parallel to the center line of the disk, and the amount of the ingredients that remained in the middle of the inclined surface (did not fall to the lowermost part) was weighed on a wet basis. After that, an ingredient proportion at which the topping condiment is stably placed on an inclined surface was calculated by "the amount of ingredients remained in the middle of inclined surface on a wet basis / the amount of the whole materials on a wet basis". As for a sensory test, the evaluations were performed by four trained sensory inspectors according to the following evaluation criteria. Note that the expression "4M" in Tables 1 to 4 is an abbreviated term for 4 mesh, and the expression "16M" is an abbreviated term for 16 mesh.

### <Deliciousness>

5: delicious
4: relatively delicious
3: neutral
2: relatively not delicious
1: not delicious

### <Mildness>

5: mild
4: slightly mild
3: neutral
2: slightly not mild
1: not mild

### <Degree of dropping down of ingredients>

5: hardly drop down
4: slightly hardly drop down
3: neutral
2: slightly easily drop down
1: easily drop down

### <Spreading degree of condiment liquid to material>

5: spread to the whole material
4: spread generally to the material
3: neutral
2: relatively not spread to the material
1: not spread to the material sufficiently

### <Popping texture of the ingredients>

5: felt popping texture
4: felt slightly popping texture
3: neutral
2: felt not slightly popping texture
1: felt not popping texture

**[Table 1]**

| | | Comparative Example | | Example | | | |
|---|---|---|---|---|---|---|---|
| | | 1 | 2 | 1 | 2 | 3 | 4 |
| <Prescription for condiment> | | | | | | | |
| Grain sesame | | | 20 | | | | 100 |
| Yellow mustard seeds | | 10 | | 100 | 100 | 100 | |
| Ground sesame | | | | 1 | 20 | 125 | 20 |
| Coarsely ground pepper | | | | 2 | 2 | 2 | 2 |
| Xanthan gum | parts by mass | 0.5 | 0.5 | 0.5 | 0.5 | 0.5 | 0.5 |
| Processed starch (hydroxypropylated phosphate-crosslinked starch) | parts by mass | 20 | 20 | 20 | 20 | 20 | 20 |
| High-fructose com syrup | parts by mass | 200 | 200 | 200 | 200 | 200 | 200 |
| Common salt | parts by mass | 40 | 40 | 40 | 40 | 40 | 40 |
| Grain vinegar (acidity: 4.2%) | parts by mass | 200 | 200 | 200 | 200 | 200 | 200 |
| Water | | + | + | + | + | + | + |
| Total | parts by mass | 1000 | 1000 | 1000 | 1000 | 1000 | 1000 |
| 4M-on | wet weight | 0 | 0 | 0 | 0 | 0 | 0 |
| 4M-pass to 16M-on | wet weight | 24 | 48 | 242 | 270 | 340 | 280 |
| j/whole condiment [1 to 50%] | | 2.4% | 4.8% | 24.2% | 27.0% | 34.0% | 28.0% |
| 16M-pass to 100-mesh-on ingredient | wet weight | 0 | 0 | 1 | 40 | 180 | 30 |
| k/whole condiment 0.1 to 50% | | 0.0% | 0.0% | 0.1% | 4.0% | 18.0% | 3.0% |
| 4M-pass to 16M-on spherical ingredient | wet weight | 24 | 48 | 240 | 240 | 240 | 170 |
| l/whole condiment [3% or more] | | 2.4% | 4.8% | 24.0% | 24.0% | 24.0% | 17.0% |
| 1/j [10 to 100% | | 100.0% | 100.0% | 99.2% | 88.9% | 70.6% | 60.7% |
| 4M-pass to 16M-on non-spherical ingredient | wet weight | 0 | 0 | 2 | 30 | 100 | 110 |
| (k+16M non-spherical ingredient)/l [0.1 to 140%] | | 0.0% | 0.0% | 1.3% | 29.2% | 116.7% | 82.4% |

| <Analysis value of condiment> | | | | | | | |
|---|---|---|---|---|---|---|---|
| Acetic acid concentration | % by mass | 0.8 | 0.8 | 0.8 | 0.8 | 0.8 | 0.8 |
| Viscosity (at 20°C) | mPa·s | 540 | 500 | 1460 | 1940 | 3480 | 1080 |
| Bostwick viscosity (at 20°C for 15 seconds) | cm | 27.5 | 27.0 | 16.3 | 15.0 | 8.4 | 19.0 |
| Bostwick viscosity (at 20°C for 30 seconds) | cm | 28 or more | 28 or more | 18.6 | 17.0 | 9.5 | 21.5 |
| Bostwick viscosity (at 20°C for 60 seconds) | cm | 28 or more | 28 or more | 21.0 | 18.7 | 10.6 | 23.6 |

| <Results of sensory evaluation> Salad | | | | | | | |
|---|---|---|---|---|---|---|---|
| Deliciousness | | 2 | 2 | 4 | 4 | 5 | 4 |
| Mildness | | 3 | 3 | 4 | 5 | 5 | 5 |
| Degree of dropping down of ingredients | | 3 | 3 | 4 | 4 | 5 | 4 |
| Spreading of condiment liquid to material | | 4 | 4 | 4 | 5 | 4 | 4 |
| Popping texture of ingredients | | 2 | 2 | 4 | 4 | 5 | 4 |
| Ingredient proportion at which stably placed on inclined surface | | 10% | 10% | 68% | 70% | 100% | 64% |

**[Table 2]**

| | | Comparative Example | | Example | | |
|---|---|---|---|---|---|---|
| | | 3 | 4 | 5 | 6 | 7 |
| <Prescription for condiment> | | | | | | |
| Tapioca | | 20 | | | | |
| Chia seeds | | | | 33 | | |
| Basil seeds | | | | | 12 | |
| Grain sesame | | | | | | |
| Yellow mustard seeds | | | 1 | | | 49 |
| Ground sesame | | 20 | 10 | 20 | 10 | 10 |
| Coarsely ground pepper | | 4 | 18 | 4 | 4 | 1 |
| Xanthan gum | parts by mass | 0.5 | 0.5 | 0.5 | 0.5 | 0.5 |
| Processed starch (hydroxypropylated phosphate-crosslinked starch) | parts by mass | 20 | 20 | 20 | 20 | 20 |
| High-fructose corn syrup | parts by mass | 200 | 200 | 200 | 200 | 200 |
| Common salt | parts by mass | 40 | 40 | 40 | 40 | 40 |
| Grain vinegar (acidity: 4.2%) | parts by mass | 200 | 200 | 200 | 200 | 200 |
| Water | | + | + | + | + | + |
| Total | parts by mass | 1000 | 1000 | 1000 | 1000 | 1000 |
| 4M-on | wet weight | 100 | 0 | 0 | 0 | 0 |
| 4M-pass to 16M-on | wet weight | 30 | 37 | 360 | 230 | 131 |
| j/whole condiment [1 to 50%] | | 3.0% | 3.7% | 36.0% | 23.0% | 13.1% |
| 16M-pass to 100-mesh-on ingredient | wet weight | 17 | 30 | 20 | 30 | 8 |
| k/whole condiment [0.1 to 50%] | | 1.7% | 3.0% | 2.0% | 3.0% | 0.8% |
| 4M-pass to 16M-on spherical ingredient | wet weight | 0 | 24 | 330 | 217 | 123 |
| l/whole condiment [3% or more] | | 0.0% | 2.4% | 33.0% | 21.7% | 12.3% |
| l/j [10 to 100%] | | 0 | 65% | 92% | 94% | 94% |
| 4M-pass to 16M-on non-spherical ingredient | wet weight | 30 | 6 | 60 | 13 | 8 |
| (k+16M non-spherical ingredient)/l [0.1 to 140%] | | - | 150.0% | 24.2% | 19.8% | 13.0% |

| <Analysis value of condiment> | | | | | | |
|---|---|---|---|---|---|---|
| Acetic acid concentration | % by mass | 0.8 | 0.8 | 0,8 | 0.8 | 0.8 |
| Viscosity (at 20°C) | mPa·s | 1320 | 500 | 1720 | 1000 | 1200 |
| Bostwick viscosity (at 20°C for 15 seconds) | cm | 16.5 | 28.0 | 14.8 | 19.2 | 18.0 |
| Bostwick viscosity (at 20°C for 30 seconds) | cm | 18.3 | 28 or more | 16.5 | 21.4 | 20.0 |
| Bostwick viscosity (at 20°C for 60 seconds) | cm | 20.0 | 28 or more | 18.5 | 23.7 | 22.0 |

| <Results of sensory evaluation> Salad | | | | | | |
|---|---|---|---|---|---|---|
| Deliciousness | | 2 | 2 | 4 | 4 | 4 |
| Mildness | | 3 | 3 | 5 | 4 | 4 |
| Degree of dropping down of ingredients | | 2 | 2 | 4 | 4 | 4 |
| Spreading of condiment liquid to material | | 3 | 3 | 3 | 3 | 3 |
| Popping texture of ingredients | | 2 | 2 | 3 | 3 | 3 |
| Ingredient proportion at which stably placed on inclined surface | | 0% | 0% | 67% | 41% | 44% |

**[Table 3]**

| | | Comparative Example | Example | | | | Comparative Example |
|---|---|---|---|---|---|---|---|
| | | 5 | 8 | 9 | 10 | 11 | 6 |
| <Prescription for condiment> | | | | | | | |
| Yellow mustard seeds | | 10 | 100 | 100 | 100 | 100 | 100 |
| Coarsely ground pepper | | 2 | 2 | 2 | 2 | 2 | 2 |
| Ground mustard (yellow) | | 20 | 20 | 20 | 20 | 20 | 20 |
| Xanthan gum | parts by mass | 2 | 2 | 7.5 | 1.2 | 1.5 | 1.8 |
| Processed starch (hydroxypropylated phosphate-crosslinked starch) | parts by mass | | | | 30 | 40 | 45 |
| High-fructose com syrup | parts by mass | 200 | 200 | 200 | 200 | 200 | 200 |
| Common salt | parts by mass | 40 | 40 | 40 | 40 | 40 | 40 |
| Grain vinegar (acidity: 4.2%) | parts by mass | 200 | 200 | 200 | 200 | 200 | 200 |
| Water | | + | + | + | + | + | + |
| Total | parts by mass | 1000 | 1000 | 1000 | 1000 | 1000 | 1000 |
| 4M-on | wet weight | 0 | 0 | 0 | 0 | 0 | |
| 4M-pass to 16M-on | wet weight | 37 | 266 | 266 | 266 | 266 | 266 |
| j/whole condiment [1 to 50%] | | 3.7% | 26.6% | 26.6% | 26.6% | 26.6% | 26.6% |
| 16M-pass to 100-mesh-on ingredient | wet weight | 7 | 14 | 14 | 14 | 14 | 14 |
| k/whole condiment [0.1 to 50%] | | 0.7% | 1.4% | 1.4% | 1.4% | 1.4% | 1.4% |
| 4M-pass to 16M-on spherical ingredient | wet weight | 24 | 240 | 240 | 240 | 240 | 240 |
| l/whole condiment [3% or more] | | 2.4% | 24.0% | 24.0% | 24.0% | 24.0% | 24.0% |
| l/j [10 to 100%] | | 64.9% | 90.2% | 90.2% | 90.2% | 90.2% | 90.2% |
| 4M-pass to 16M-on non-spherical ingredient | wet weight | 13 | 26 | 26 | 26 | 26 | 26 |
| (k+16M non-spherical ingredient)/l [0.1 to 140%] | | 83.3% | 16.7% | 16.7% | 16.7% | 16.7% | 16.7% |

| <Analysis value of condiment> | | | | | | | |
|---|---|---|---|---|---|---|---|
| Acetic acid concentration | % by mass | 0.8 | 0.8 | 0.8 | 0.8 | 0.8 | 0.8 |
| Viscosity (at 20°C) | mPa·s | 500 | 600 | 4800 | 6080 | 8200 | 9600 |
| Bostwick viscosity (at 20°C for 15 seconds) | cm | 27.0 | 23.5 | 5.5 | 8.0 | 6.8 | 5.2 |
| Bostwick viscosity (at 20°C for 30 seconds) | cm | 28 or more | 24.9 | 6.0 | 8.7 | 7.4 | 5.8 |
| Bostwick viscosity (at 20°C for 60 seconds) | cm | 28 or more | 26.5 | 6.6 | 9.4 | 8.0 | 6.2 |
| <Results of sensory evaluation> Salad | | | | | | | |
| Deliciousness | | 2 | 3 | 5 | 4 | 3 | 2 |
| Mildness | | 5 | 4 | 4 | 4 | 4 | 4 |
| Degree of dropping down of ingredients | | 2 | 3 | 5 | 4 | 4 | 4 |
| Spreading of condiment liquid to material | | 4 | 4 | 4 | 4 | 3 | 2 |
| Popping texture of ingredients | | 3 | 4 | 5 | 5 | 5 | 4 |
| Ingredient proportion at which stably placed on inclined surface | | 1 0% | 30% | 100% | 100% | 100% | 100% |

**[Table 4]**

| | Height (cm) | tanα | Repose angle (°) |
|---|---|---|---|
| Black tapioca | 2.5 | 0.588 | 30.5 |
| Tapioca | 2.7 | 0.635 | 32.4 |
| Yellow mustard seeds | 3.2 | 0.753 | 37.0 |
| Brown mustard seeds | 2.0 | 0.471 | 25.2 |
| Yellow and brown mustard seeds mixture | 2.6 | 0.612 | 31.5 |
| Grain sesame | 3.4 | 0.800 | 38.7 |
| Onion flakes | 4.5 | 1.059 | 46.6 |
| Ground mustard (yellow) | 5.0 | 1.176 | 49.6 |
| Ground sesame | 4.8 | 1.129 | 48.5 |
| Chia seeds | 2.5 | 0.576 | 30.0 |
| Basil seeds | 3.2 | 0.753 | 37.0 |
| Coarsely ground pepper | 4.3 | 1.012 | 45.3 |

From Tables 1 to 4, it is shown that a spherical ingredient-containing topping condiment in which a specific amount of a 16-mesh-pass to 100-mesh-on ingredient is mixed in addition to a 4-mesh-pass to 16-mesh-on spherical ingredient, and which has viscosity measured by a B-type viscometer and viscosity measured by a Bostwick viscometer each within the scope of the present invention is easy to mix with a foodstuff, is mild, hardly drops down the ingredients, favorably spreads to a material, and provides a popping texture of the ingredients. In contrast, a condiment with lower amount of a 4-mesh-pass to 16-mesh-on spherical ingredient, a condiment without a 16-mesh-pass to 100-mesh-on ingredient, or a condiment which does not satisfy the viscosity conditions do not sufficiently mix with a foodstuff, allowed the ingredients to drop down, or did not provide a popping texture of the ingredients.

## Claims

1. A spherical ingredient-containing topping condiment, comprising:
(A) a 4-mesh-pass to 16-mesh-on ingredient in an amount of 1 to 50% by weight of a whole condiment on a wet basis; and
(B) a 16-mesh-pass to 100-mesh-on ingredient in an amount of 0.1 to 50% by weight of the whole condiment on a wet basis, wherein
the ingredient (A) in an amount of 10 to 100% by weight on a wet basis is a spherical ingredient having a repose angle α of 20° < α < 45° determined with "tan α = H/r" by measuring a height H (cm) that is a difference between a highest part of a holding edge for holding the ingredient and a highest part of a substantially conical symmetrical pile when the substantially conical symmetrical pile is formed with the ingredient in a dry form by an injection method on an immobilized disk having a radius r (cm) and the holding edge, the 4-mesh-pass to 16-mesh-on spherical ingredient is contained in an amount of 3.0% by weight or more of the whole condiment on a wet basis, and the whole condiment has viscosity of 600 to 8,500 mPa·s as determined by a B-type viscometer and has viscosity of 6 to 25 cm at a measurement temperature of 20°C for a measurement time of 30 seconds as determined by a Bostwick viscometer.

2. The spherical ingredient-containing topping condiment according to claim 1, wherein
a raw material of the spherical ingredient is one or more kinds selected from grain sesame and mustard seed.

3. The spherical ingredient-containing topping condiment according to claim 1 or 2, wherein
one or more kinds selected from xanthan gum and processed starch are contained as a viscosity modifier.

4. The spherical ingredient-containing topping condiment according to any one of claims 1 to 3, wherein
a sum of an amount of the ingredient (B) on a wet basis and an amount of a non-spherical ingredient in the ingredient (A) on a wet basis is 0.1 to 140% by weight of an amount of the spherical ingredient in the ingredient (A) on a wet basis.

5. A method for producing a spherical ingredient-containing topping condiment, comprising the following steps of:
mixing (A) a 4-mesh-pass to 16-mesh-on ingredient such that the (A) 4-mesh-pass to 16-mesh-on ingredient is contained in an amount of 1 to 50% by weight of a whole condiment on a wet basis, and (B) a 16-mesh-pass to 100-mesh-on ingredient such that the (B) 16-mesh-pass to 100-mesh-on ingredient is contained in an amount of 0.1 to 50% by weight of the whole condiment on a wet basis;
adjusting 10 to 100% by weight of the ingredient (A) on a wet basis such that the 10 to 100% by weight of the ingredient (A) on a wet basis is a spherical ingredient having a repose angle α of 20° < α < 45° determined with "tan α = H/r" by measuring a height H (cm) that is a difference between a highest part of a holding edge for holding the ingredient and a highest part of a substantially conical symmetrical pile when the substantially conical symmetrical pile is formed with the ingredient in a dry form by an injection method on an immobilized disk having a radius r (cm) and the holding edge;
adjusting the 4-mesh-pass to 16-mesh-on spherical ingredient such that the 4-mesh-pass to 16-mesh-on spherical ingredient is contained in an amount of 3.0% by weight or more of the whole condiment on a wet basis; and
adjusting the whole condiment such that the whole condiment has viscosity of 600 to 8,500 mPa·s as determined by a B-type viscometer, and has viscosity of 6 to 25 cm at a measurement temperature of 20°C for a measurement time of 30 seconds as determined by a Bostwick viscometer.
